Europäisches Patentamt

European Patent Office

Office européen des brevets

(19)

(11) Publication number: **0 248 191 B1**

# EUROPEAN PATENT SPECIFICATION

(12)

(45) Date of publication of patent specification: **08.04.92**   (51) Int. Cl.⁵: **B60M 1/23**

(21) Application number: **87105914.3**

(22) Date of filing: **22.04.87**

(54) **Device for suspending electric trolley wires to messenger cables.**

(30) Priority: **02.05.86 IT 2171686 U**

(43) Date of publication of application:
**09.12.87 Bulletin 87/50**

(45) Publication of the grant of the patent:
**08.04.92 Bulletin 92/15**

(84) Designated Contracting States:
**CH DE ES FR GB LI NL SE**

(56) References cited:
**US-A- 1 643 749**

(73) Proprietor: **POLIECO S.r.l.**
**Via Marcona 72**
**I-20129 Milano(IT)**

(72) Inventor: **Morara, Ferdinando**
**Viale Campania No. 31**
**I-20100 Milano(IT)**

(74) Representative: **Coloberti, Luigi**
**Via E. de Amicis No. 25**
**I-20123 Milano(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention refers to a suspension device for suspending electric conductors to messenger cables, in particular for adjustably suspending trolley wires in lines for the electrification of railways and the like.

In carrying out electric trolley wires for railways and the like, the trolley wire usually runs parallel to the rails, since it is suspended from a messenger or supporting cable by means of stay wires or other suitable suspension devices.

Unlike the electric trolley wire, the messenger cable is arched between two adjacent anchorage points; consequently, the distance between the messenger cable and the electric wire varies from point to point, ranging from a maximum in correspondence With the anchorage points of the cable to a minimum at the centre.

It is necessary therefore to provide suspension devices of different lengths or which can be adapted or adjusted on the site in order to suit the various requirements. Moreover, the suspension device must in general permit the insulation of the supporting cable from the overhead electric line and, in the case of electric contact lines for railways, allow a certain amount of upward movement of the electric wire in order to compensate for the thrust exerted by the trolley, without the tensile stress on the electric wire undergoing sudden variations.

Use is currently made of suspension devices of various types and shapes, that is to say, of fixed length or which can be adjusted for example by means of stay bolts, or having a particular shape. From US-A-1.643.749 a hanger or suspension device for overhead trackways is known, comprising a suspension element in the form of an inverted U shaped element provided with heads on each end, which are adjustably clamped within holes or recesses of two mating members of reduced length, rigidly engaging a track rail ; a clamping bolt is provided at the lower end of said mating members and a retaining finger is placed in an hole provided at the upper end of said members.

Although the hanger according to US-A-1,643,749 allows to reduce the adjustment by providing steppered holes on the mating members, nevertheless the mechanical strength are totally concentrated on the two head portions of the suspension element and on the edges of corresponding holes. Therefore in an hanger according to the document, it is impossible to obtain a wide range of adjustement positions while maintaining the required mechanical strength, unless to use hangers of suitable material, having several members of complex design and more difficult in use. To date, no-one has yet put forward a solution to the problem of suspending an electric wire and of adjusting the length of the suspension device which, in addition to ensuring the required characteristics of electrical insulation and mechanical strength under widely varied environmental conditions, is also easy and cheap to produce with reinforced plastic materials, and which at the same time is also easy to use and to adjust at the site.

Therefore an object of present invention is to provide a suspension device for adjustably suspending electric conductors, which may be moulded with fiber reinforced plastic material, allowing an adequate electrical insulation and an appropriate distribution of mechanical strengths along the entire length of the same device.

This can all be obtained by means of a suspension device according to this invention, as defined in the main claim. Particular embodiments are defined in the dependent claims.

The device according to this invention will be described in greater detail hereunder, with reference to the examples of the accompanying drawings, in which:

Fig. 1 shows a frontal view of a first embodiment of a device for supporting electric wires for railway systems;

Fig. 2 shows a side view of the device of figure 1;

Fig. 3 shows a cross-sectional view along the line 3-3 of figure 1;

Fig. 4 shows a longitudinal cross-sectional view of the securing clamp, along the line 4-4 of figure 3;

Fig. 5 shows a longitudinal cross-sectional view along the line 5-5 of figure 2;

Fig. 6 shows a front view of a second embodiment;

Fig. 7 shows a side view of figure 6;

Fig. 8 shows a front view of a third embodiment;

Fig. 9 shows a side view of figure 8;

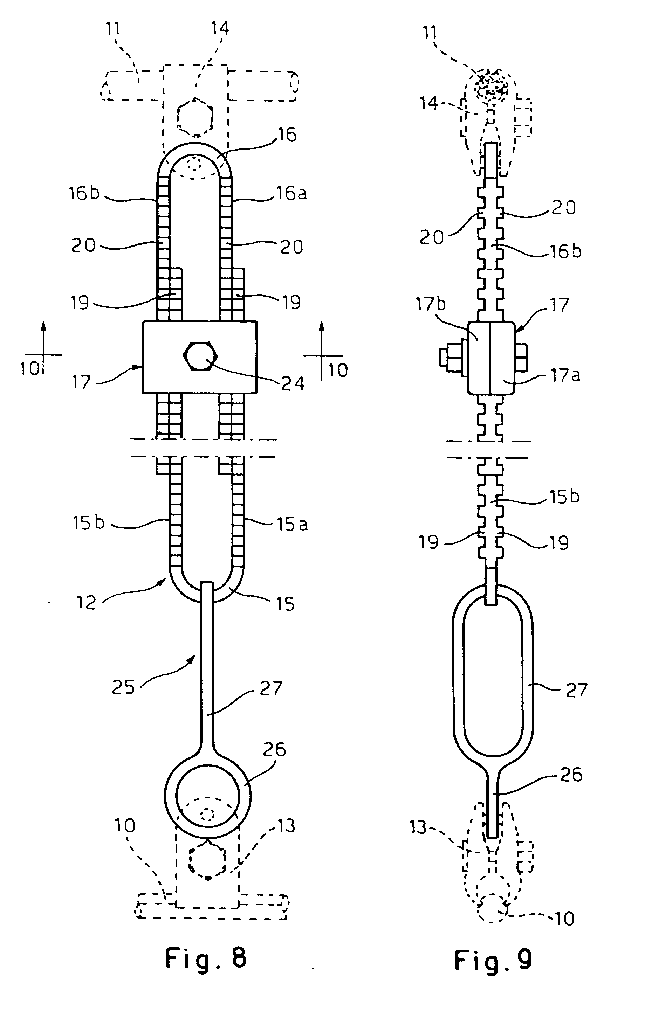

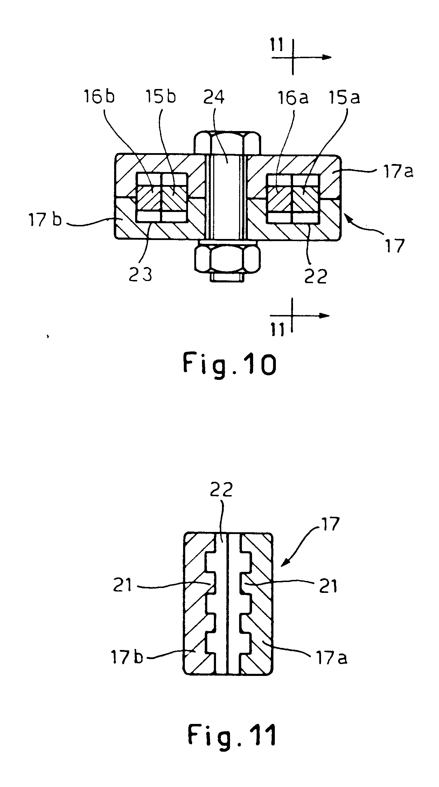

Fig. IO shows a cross-sectional view along line IO-IO of figure 8;

Fig. II shows a longitudinal cross-sectional view of the clamp along the line II-II of figure IO.

As shown in the figures from I to 5, an electric wire IO of an electrification line for railways and the like, is suspended from a messenger cable by means of a plurality of supporting devices I2 which are pivoted or connected to hanging clamps I3 and I4 designed to secure themselves to the electric conductor or wire IO and to the messenger cable II, as shown. The suspension device I2 must be able to adapt its length to the variable distance between conductor IO and messenger cable II; it must consequently be adjustable in length in order to enable it to be assembled and adjusted at the site with the utmost ease, and to adapt to any situation.

The supporting device I2, in the example

shown, is made up of two toothed elements 15 and 16 which are elongated in the direction of their longitudinal axes and provided on at least one face with a plurality of crosswise teeth aligned in the direction of the longitudinal axis of each individual element. One or more intermediate clamps 17 serve the purpose of connecting or keeping the two toothed elements 15, 16 engaged with each other in a coplanar or overlapped condition according to the lateral or frontal disposition of the teeth.

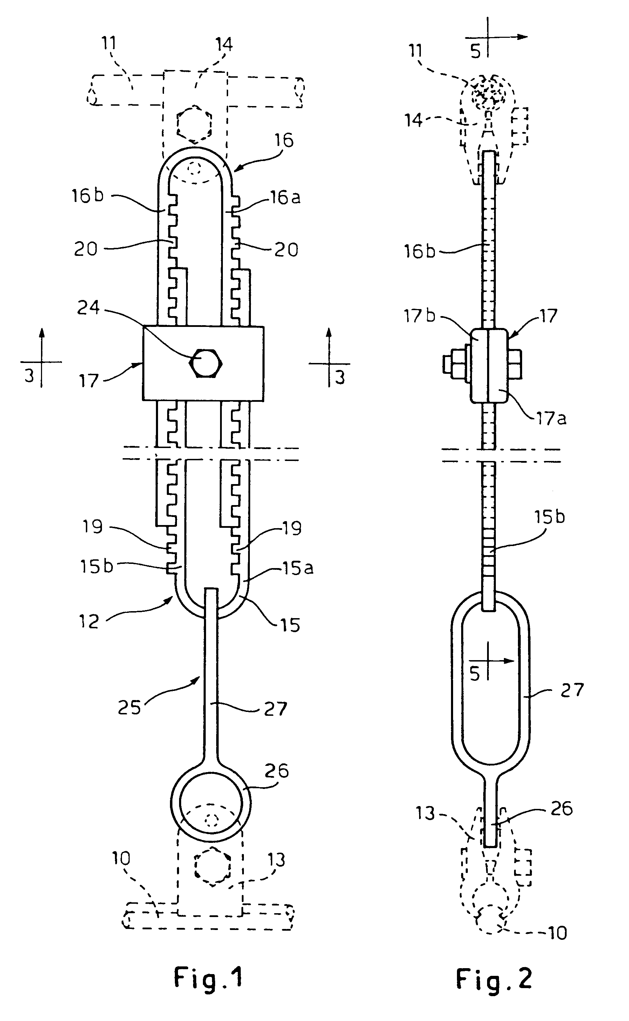

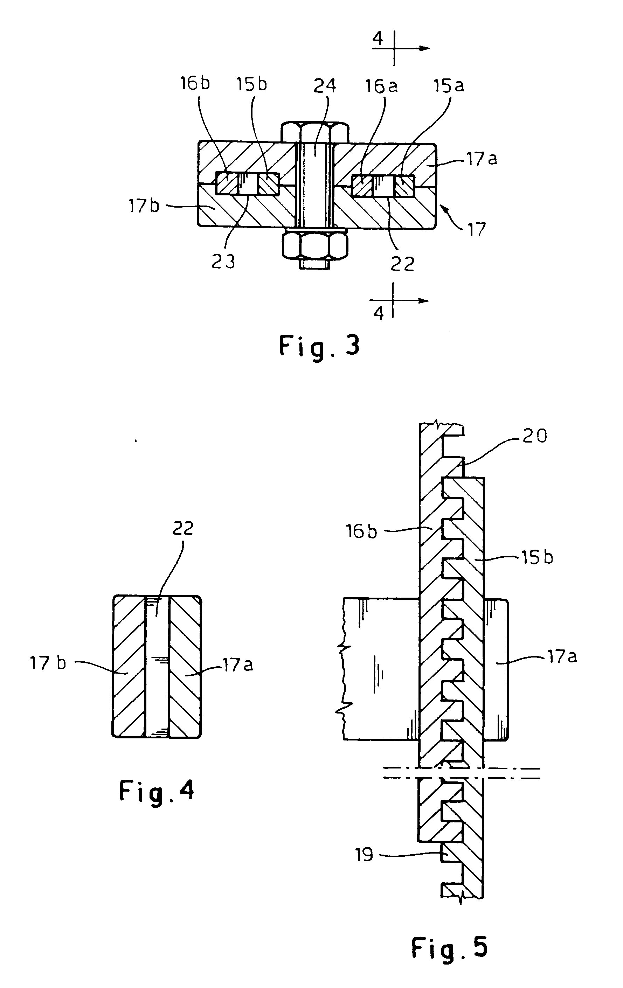

In particular, in the embodiment shown in figures 1 to 5, the two elements 15 and 16 are identical and each consist of a U-shaped element, with legs 15a, 15b and respectively 16a, 16b, provided on one side with teeth 19 and 20. In the case shown, in which each leg is provided with only one row of teeth, the teeth of both legs 15a, 15b and 16a, 16b of each element are disposed on the same side of the legs.

The two U-shaped toothed elements are positioned in the same plane, one next to the other, with the corresponding toothed legs 15a, 16a and 15b, 16b opposite each other and with their teeth reciprocally engaged over at least part of the length of the legs, passing through grooves 22 and 23 in the securing clamp 17. The clamp 17 is preferably made up of two matching halves 17a and 17b which are disengageably secured together by means of one or more bolts 24.

The device 12 is completed by a movable link member 25 connecting it to one of the hanging clamps, for example to clamp 13 connected to the electric conductor 10, so as to allow the conductor 10 a certain amount of lateral and relative upwards movements, which are necessary in order to compensate for the thrust exerted by the pantograph trolley or by the current collector which runs along the conductor wire 10 whenever a train passes. In the case shown, the link member 25 consists of a double eyelet element having a first circular eyelet 26 which connects with the clamp 13 and a second elongated eyelet 27 lying in a plane at right angles to that of the eyelet 26 which connects with the previously described suspension device 12.

The suspension device according to this invention is used as follows: the two opposing U-shaped elements are placed close together in the same plane to form a loop, with their teeth engaged after having passed the toothed element 15 through the elongated eyelet 27 of the lower link member 25; then the relative position of the two U-shaped elements is adjusted according to the desired length of the suspension device, and the clamp 17 is fitted onto them and tightened with its bolt 24. After having assembled the device, the two end clamps 13 and 14 are fitted on and then secured respectively to the conductor 10 and the cable 11.

It will be clear, from what has been described and shown, that by arranging U-shaped, or other suitably shaped, toothed elements in the desired length, it is possible to make up supporting devices variously adjustable in length and adaptable to the most widely varied requirements.

The entire suspension device, preferably the two toothed elements 15, 16 and the lower link member 25, are advantageously made of fibreglass reinforced plastic material, for example of compact polycarbonate with a fibreglass filler, so as to give the whole assembly a highly resistant rigid structure which electrically isolates the cable 11 from the electric conductor 10.

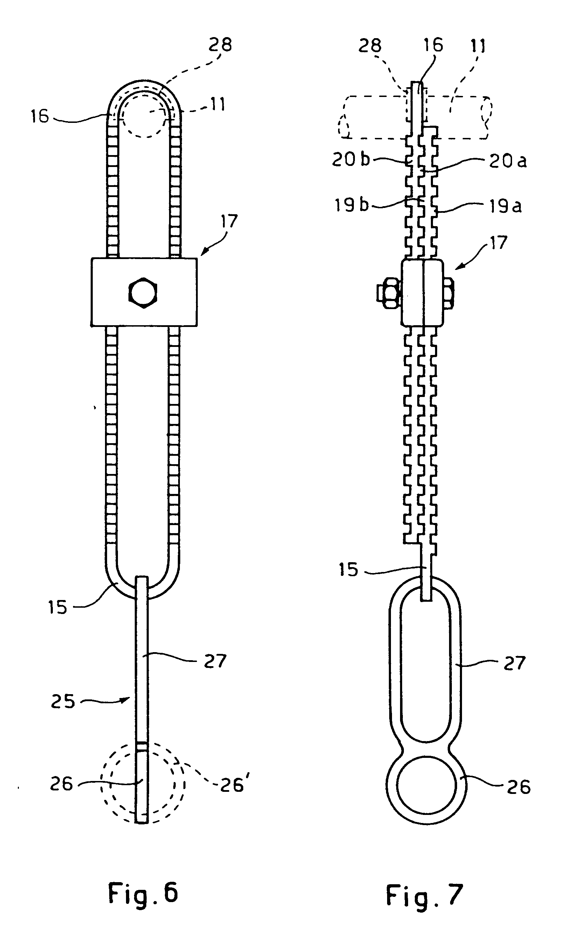

Figures 6 and 7 of the drawings show a second embodiment. In this case, both of the U-shaped toothed elements 15 and 16 are provided with toothing 19a, 19b and 20a, 20b on both main faces, as shown; in particular, the teeth on one of the faces of each element 15, 16 can be aligned with the teeth on the other face, or can be shifted in a longitudinal direction by half a pitch, that is to say, by half the distance between one tooth and the next, in order to enable the device to be adjusted in length more easily. The device of figures 6 and 7 can be made in exactly the same way as the previous example, however, as shown, in certain cases the upper clamp 14 can be eliminated due to the fact that the upper U-shaped element 16 can be provided with a saddle and placed directly astride the suspension cable 11. In this case, the lower element 25 is modified in such a way that both the eyelets 26 and 27 are coplanar instead of at right angles to each other, as shown by the dotted line 26' in the same figure and in the previous ones. The remainder of the device of figures 6 and 7 is made up and used in a wholly identical way to the previous one; consequently, the same numerical references have been used to indicate similar or functionally equivalent parts.

A third embodiment is shown in the figures from 8 to 11 of the accompanying drawings.

Here too, the supporting device 12 is likewise made up of two toothed elements 15 and 16 sliding in the direction of their longitudinal axis and provided on at least one of the front and/or rear faces with a plurality of crosswise teeth 19, 20, disposed aligned in the direction of the longitudinal axis of each individual element. One or more intermediate clamps 17 serve as before to connect the two suspension elements together in the coplanar condition of the elements 15 and 16 and positioned as shown in figures 8 and 9.

In the embodiment shown, the two elements 15 and 16 are identical, of equal length and each consisting of an U-shaped element, with legs 15a, 15b and respectively 16a, provided with teeth 19 and 20 on both of the front and rear faces.

The two U-shaped toothed elements are disposed side by side in the same plane, as in the first case, with the corresponding toothed legs in contact, and with the teeth aligned with one another so as to permit their engagement with an identical double toothing 2I provided on opposing sides of two through slots 22 and 23 in the securing clamp I7. The clamp I7 is preferably made up of two matching halves I7a and I7b which are disengageably secured together by means of one or more bolts 24.

The device I2 is completed by a link member 25 to connect it to the lower clamp I3 of the electric conductor, in such a way as to permit lateral movement and relative upward movement, as in the previous cases. The same numerical references have also been used in this latter case to indicate similar or functionally equivalent parts.

## Claims

1. Suspension device, in particular for adjustably suspending an electric conductor (10) from a messenger cable (11) by means of suspension elements (12) connected to the aforesaid conductor (10) and cable (11), said device comprising a first suspension element (15) and a second suspension element (16) each having a longitudinal axis parallel to outer faces of the aforesaid elements, characterised by the fact that the two suspension elements (15, 16) are identical and each consist of a U-shaped element having parallel legs provided with toothing (19, 20) on at least one of its sides, said toothing having teeth (19, 20) aligned in the direction of the aforementioned longitudinal axis, said two toothed elements (15, 16) being disposed side by side, and that it further comprises at least one securing clamp (17) to connect one toothed element (15) to the other one (16).

2. Device as claimed in claim I, characterized by the fact that each suspension element (l5, l6) comprises a U-shaped element having parallel legs (l5a, l5b; l6a, l6b) in which toothing is provided on both legs (l5a, l5b; l6a, l6b) of said U-shaped element (l5, l6).

3. Device as claimed in claim I or 2, characterized by the fact that the teeth (l9, 2O) are provided on at least one lateral face of each suspension element (l5, l6).

4. Device as claimed in claim I or 2, characterized by the fact that the teeth (l9, 2O) are provided on at least one of the main faces of each suspension element (l5, l6).

5. Device as claimed in the previous claims, characterized by the fact that the two U-shaped elements (l5, l6) are positioned opposite each other, with the corresponding legs (l5a, l5b; l6a, l6b) side by side and with the toothing (l9, 2O) of the legs directly engaged with each other, said legs (l5a, l5b; l6a, l6b) passing through slots (22) in the securing clamp (l7) to form an elongated loop in the direction of the longitudinal axis of the suspension device.

6. Device as claimed in the previous claims, characterized by the fact of comprising a link member (25), said link member (25) comprising a first (26) and a second (27) eyelet one of which (27) is inserted in the loop defined by the two opposing U-shaped elements (l5, l6).

7. Device as claimed in claim 6, characterized by the fact that the two eyelets (26, 27) of the link member (25) lie in planes at right angles to each other.

8. Device as claimed in claim 6, characterized by the fact that the two eyelets (26, 27) of the link member (25) are disposed in the same plane.

9. Device as claimed in claim 6, characterized by the fact that one of the eyelets (27) of the link member (25) is in the form of an elongated loop.

10. Device as claimed in any of the previous claims, characterized by the fact that the intermediate securing clamp (l7) is made up of two halves (l7a, l7b) each half being provided with longitudinal grooves defining seats for the legs (l5a, l6a; l5b, l6b) of the aforesaid U-shaped suspension elements (l5, l6).

11. Device as claimed in claim 2 or 3, characterized by the fact that the teeth (l9, 2O) on one face of each leg of the U-shaped elements (l5, l6) are displaced by half a pitch with respect to the teeth (l9, 2O) on the opposite face of the same leg of the U-shaped element (l5, l6).

12. Device as claimed in claim 2, characterized by the fact that toothing (l9, 2O) is provided on at least one main face of each U-shaped element (l5, l6) and by the fact that a securing clamp (l7) is provided, said clamp having toothed grooves for the legs of the U-shaped elements, with the teeth (2l) of each groove (22) in the clamp (l7) which engage with both of the toothings of two adjacent legs of said U-shaped elements (l5, l6).

13. Device as claimed in claims 2 and 7, characterized by the fact that one of the U-shaped suspension elements (l6) is connected to the suspension cable (ll) by means of a supplementary clamp (l4).

14. Device as claimed in claims 2 and 8, characterized by the fact that one of the suspension elements (l6) is positioned directly astride the suspension cable (ll), and saddle means (28) are disposed between said suspension element (l6) and said cable (ll).

**Revendications**

1. Dispositif de suspension, en particulier pour suspendre un conducteur électrique (10) ajustable d'un câble porteur (11) au moyen d'éléments de suspension (12) raccordés au dit conducteur (10) et au câble (11), le dit dispositif comprenant un premier élément de suspension (15) et un second élément de suspension (16) chacun ayant un axe longitudinal parallèle aux faces extérieures des dits éléments, caractérisé par le fait que les deux éléments de suspension (15, 16) sont identiques et que chacun consiste en un élément en forme de U ayant des branches parallèles munies de denture (19, 20) sur au moins un de ses côtés, la dite denture ayant des dents (19, 20) alignées dans la direction de l'axe longitudinal mentionné plus haut, les dits éléments dentelés (15, 16) étant disposés l'un à côté de l'autre, et qu'il comprend en plus au moins une attache de fixation (17) pour raccorder un des éléments dentelés à l'autre (16).

2. Dispositif comme revendiqué à la revendication 1, caractérisé par le fait que chaque élément de suspension (15, 16) comprend un élément en forme de U ayant des branches parallèles (15a, 15b; 16a, 16b) dans lequel la denture est présente sur les deux branches (15a, 15b; 16a, 16b) du dit élément en forme de U (15, 16).

3. Dispositif comme revendiqué aux revendications 1 ou 2, caractérisé par le fait que les dents (19, 20) sont présentes sur au moins une face latérale de chaque élément de suspension (15, 16).

4. Dispositif comme revendiqué aux revendications 1 ou 2, caractérisé par le fait que les dents (19, 20) sont présentes sur au moins une des faces principales de chaque élément de suspension (15, 16).

5. Dispositif comme revendiqué dans la revendication précédente, caractérisé par le fait que les deux éléments en forme de U ((5, 16) sont disposés en face l'un de l'autre, avec les branches correspondantes (15a, 15b; 16a, 16b) à côté l'une de l'autre avec la denture (19, 20) des branches directement en prise l'une avec l'autre, les dites branches (15a, 15b; 16a, 16b) passant à travers des encoches (22) pratiquées dans les attaches de fixation (17) pour former une boucle allongée dans la direction de l'axe longitudinal du dispositif de suspension.

6. Dispositif comme revendiqué dans la revendication précédente, caractérisé par le fait qu'il comporte un élément de liaison (25) comprenant un premier (26) et un second (27) oeillet l'un d'eux (27) est inséré dans la boucle formée par les deux éléments opposés en forme de U (15, 16).

7. Dispositif comme revendiqué à la revendication 6, caractérisé par le fait que les deux oeillets (26, 27) de l'élément de liaison (25) se trouvent sur des plans formant angle droit l'un avec l'autre.

8. Dispositif comme revendiqué à la revendication 6, caractérisé par le fait que les deux oeillets (26, 17) de l'élément de liaison (25) sont disposés sur le même plan.

9. Dispositif comme revendiqué à la revendication 6, caractérisé par le fait qu'un des oeillets (27) de l'élément de liaison (25) a la forme d'une boucle allongée.

10. Dispositif comme revendiqué dans toutes les revendications précédentes, caractérisé par le fait que l'attache de fixation intermédiaire (17) est composée de deux moitiés (17a, 17b) chacune de celles-ci étant munie de rainures longitudinales formant l'emplacement des branches (15a, 16a; 15b, 16b) des dits éléments de suspension en forme de U (15, 16).

11. Dispositif comme revendiqué à la revendication 2 ou 3, caractérisé par le fait que les dents (19, 10) sur les faces de chaque branche des éléments en forme de U (15, 16) sont déplacées d'un demi cran par rapport aux dents (19, 20) qui se trouvent sur la faces opposée de la même branche de l'élément en forme de U (15, 16).

12. Dispositif comme revendiqué à la revendication 2, caractérisé par le fait qu'au moins une des faces principales de chaque élément en forme de U (15, 16) est muni de denture (19, 20) et par le fait qu'une attache de fixation (17) est fournie, la dite attache possédant des rainures dentelés pour les branches des éléments en forme de U, avec les dents (21) de chaque rainure (22) de l'attache de fixation (17) en prise avec les deux dentures des branches contigües des dits éléments en forme de U (15, 16).

13. Dispositif comme revendiqué aux revendications 2 et 7 caractérisé par le fait qu'un des éléments de suspension en forme de U (16) est raccordé au câble de suspension (11) au moyen d'une attache supplémentaire (14).

14. Dispositif comme revendiqué aux revendications 2 et 8 caractérisé par le fait qu'un des éléments de suspension (16) est disposé directement à cheval sur le câble de suspension (11), et les serre-fils sont disposés entre les dits éléments de suspension (16) et le dit câble (11).

**Patentansprüche**

1. Aufhängungsvorrichtung, speziell zur regulierbaren Aufhängung von Stromleitungen (10) an Tragseilen (11) mittels Aufhängungselementen (12), die mit der vorgenannten Leitung (10) und dem Tragseil (11) verbunden werden, wobei die besagte Vorrichtung ein erstes Aufhängungselement (15) und ein zweites Aufhängungselement (16) aufweist, die jeweils eine Längsachse besitzen, die parallel zur Außenfläche der vorgenannten Elemente verläuft, gekennzeichnet durch den Umstand, daß die beiden Aufhängungselemente (15, 16) miteinander identisch sind und jeweils aus einem U-förmigen Element bestehen, das zueinander parallele Schenkel aufweist, welche mit einer Zahnung (19, 20) an mindestens einer ihrer Seiten versehen sind, wobei die Zähne der besagten Zahnung (19, 20) in der Richtung der obengenannten Längsachse ausgerichtet sind, wobei die besagten beiden gezahnten Elemente (15, 16) nebeneinander angeordnet sind, sowie durch den Umstand, daß sie weiter mindestens eine Befestigungsklemme (17) aufweist, die zur Verbindung des einen gezahnten Elements (15) mit dem anderen (16) dient.

2. Eine Vorrichtung wie unter Patentanspruch 1 beschrieben, gekennzeichnet durch den Umstand, daß jedes Aufhängungselement (15, 16) ein U-förmiges Element mit parallelen Schenkeln (15a, 15b; 16a, 16b) aufweist, bei denen die Zahnung an beiden Schenkeln (15a, 15b; 16a, 16b) des besagten U-förmigen Elementes (15, 16) vorgesehen ist.

3. Eine Vorrichtung wie unter Patentanspruch 1 oder 2 beschrieben, gekennzeichnet durch den Umstand, daß die Zähne (19, 20) an mindestens einer Seitenfläche jeden Aufhängungselements (15, 16) vorgesehen sind.

4. Eine Vorrichtung wie unter Patentanspruch 1 oder 2 beschrieben, gekennzeichnet durch den Umstand, daß die Zähne (19, 20) an mindestens einer der Hauptflächen jeden Aufhängungselements (15, 16) vorgesehen sind.

5. Eine Vorrichtung wie unter den vorausgehenden Patentansprüchen beschrieben, gekennzeichnet durch den Umstand, daß die beiden U-förmigen Elemente (15, 16) einander gegenüberstehend angebracht sind, wobei die sich entsprechenden Schenkel (15a, 15b; 16a, 16b) sich nebeneinander befinden und die Zahnungen (19, 20) der Schenkel direkt ineinander eingreifen, wobei die besagten Schenkel (15a, 15b; 16a, 16b) durch Schlitz-Öffnungen (22) in der Befestigungsklemme (17) geführt werden und so eine verlängerte Schleife in der Richtung der Längsachse der Aufhängungsvorrichtung bilden.

6. Eine Vorrichtung wie unter den vorausgehenden Patentansprüchen beschrieben, gekennzeichnet durch den Umstand, daß sie ein Verbindungselement (25) umfaßt, wobei besagtes Verbindungselement (25) eine erste (26) und eine zweite (27) Öse aufweist, von denen eine in die Schleife eingeführt wird, welche durch die beiden gegenüberliegenden U-förmigen Elemente (15, 16) gebildet wird.

7. Eine Vorrichtung wie unter Patentanspruch 6 beschrieben, gekennzeichnet durch den Umstand, daß die beiden Ösen (26, 27) des Verbindungselements (25) in Ebenen liegen, die im rechten Winkel zueinander stehen.

8. Eine Vorrichtung wie unter Patentanspruch 6 beschrieben, gekennzeichnet durch den Umstand, daß die beiden Ösen (26, 27) des Verbindungselements (25) in derselben Ebene liegen.

9. Eine Vorrichtung wie unter Patentanspruch 6 beschrieben, gekennzeichnet durch den Umstand, daß eine der beiden Ösen (27) des Verbindungselements (25) die Form einer verlängerten Schleife aufweist.

**10.** Eine Vorrichtung wie unter einem beliebigen der vorausgehenden Patentansprüche beschrieben, gekennzeichnet durch den Umstand, daß die Zwischen-Befestigungsklemme (17) aus zwei Hälften (17a, 17b) besteht, von denen jede mit Längsnuten versehen ist, die als Sitze für die Schenkel (15a, 16a; 15b, 16b) der obengenannten U-förmigen Aufhängungselemente (15, 16) dienen.

**11.** Eine Vorrichtung wie unter Patentanspruch 2 oder 3 beschrieben, gekennzeichnet durch den Umstand, daß die Zähne (19, 20) an einer Seite jeden Schenkels des U-förmigen Elements (15, 16) gegenüber den Zähnen (19, 20) an der gegenüberliegenden Seite desselben Schenkels des U-förmigen Elements (15, 16) um eine halbe Zahnteilung versetzt sind.

**12.** Eine Vorrichtung wie unter Patentanspruch 2 beschrieben, gekennzeichnet durch den Umstand, daß die Zahnung (19, 20) an mindestens einer der Hauptflächen jeden U-förmigen Elements (15, 16) vorgesehen sind, sowie durch den Umstand, daß eine Befestigungsklemme (17) vorgesehen ist, wobei die besagte Befestigungsklemme gezahnte Nuten für die Schenkel des U-förmigen Elements aufweist, wobei die Zähne (21) jeder Nut (22) in der Klemme (17) in beide Zahnungen der beiden angrenzenden Schenkel der besagten U-förmigen Elemente (15, 16) eingreifen.

**13.** Eine Vorrichtung wie unter Patentansprüchen 2 und 7 beschrieben, gekennzeichnet durch den Umstand, daß eines der beiden U-förmigen Aufhängungselemente (16) über eine zusätzliche Klemme (14) mit dem Tragseil (11) verbunden ist.

**14.** Eine Vorrichtung wie unter Patentansprüchen 2 und 8 beschrieben, gekennzeichnet durch den Umstand, daß eines der Aufhängungselemente (16) direkt rittlings auf dem Tragseil (11) angebracht ist, und daß Sattellagervorrichtungen zwischen das besagte Aufhängungselement (16) und das besagte Tragseil (11) gefügt sind.

Fig.1

Fig.2

Fig. 3

Fig. 4

Fig. 5

Fig. 6

Fig. 7

Fig. 8

Fig. 9

11

Fig.10

Fig.11